# EUROPEAN PATENT APPLICATION

(11) **EP 4 825 560 A1**
(43) Date of publication of application: **21.10.2026**
(21) Application number: 24901991.0
(22) Date of filing: 29.04.2024
(51) Int. Cl.: B29C 49/20, B65D 23/10

(54) **ENGAGEMENT ASSEMBLY FOR ENGAGING WITH OUTER MEMBER**

(30) Priority: 11.12.2023 CN 202323382083 U
(71) Applicant: Man Wah Furniture Manufacturing (Shenzhen) Co., Ltd., Shenzhen, Guangdong 518100 (CN)
(72) Inventor: CHEN, Weiming, Guangdong 516083 (CN)
(74) Representative: Cabinet Chaillot
(86) International application number: PCT/CN2024/090562
(87) International publication number: WO 2025/123561

(57) **Abstract**

The present application relates to joint components (100) for joining an external component (200). The joint components (100) comprise a body (110) made of plastic and having a first outer surface (S₁) in at least one region, and in that region having at least one recessed portion (111) recessed inwardly relative to the first outer surface (S₁), the recessed portion (111) having an opening (115); and a joint component (120), the joint component (120) having a joint portion (121) for joining the external component (200), wherein at least a portion of the joint component (120) is arranged within the recessed portion (111) and is restricted by the recessed portion (111) in the direction of a load force (F) applied by the external component (200) to the joint component (120). The joint components of the present application can form a stable connection between the joint component and the plastic body.

## Description

### Technical Field

The present application relates to joint components for joining external components, in particular, blow-molded parts embedded with a metal part during a molding process.

### Background Technology

Plastic components are widely used in production activities, including injection-molded parts, blow-molded parts, extruded-molded parts, etc. At the joint of the plastic component and other components, wear is easy to occur, thereby shortening the life of the product. To this end, joint components of other materials, such as metal parts, are often used at the connection to prevent wear. However, with the above-described method, it is necessary to consider how to form a stable connection between the joint component and the plastic component, preventing the joint component from disengaging from the plastic component, especially when it is under load in the operating state.

In addition, blow molded parts are limited in configuration due to their thin-walled, hollow configuration and their limitation to the inflation gas pressure during the molding process, which is particularly challenging in which configuration to embed the metal part therein to form a secure connection.

### Summary of the Invention

The purpose of this application is to provide joint components for joining external components, which has a body made of plastic and a joint component for joining with the external components, and forms a stable connection between the joint component and the plastic body.

The joint components, according to the present application comprises in particular: A body, the body is made of plastic and has the first outer surface in at least one region and the body has at least one recessed portion inwardly relative to the first outer surface in the at least one region, the recessed portion having an opening; and a joint component, the joint component having a joint portion for joining the external component, wherein at least a portion of the joint component is arranged within the recessed portion in the direction of a load force applied by the external component to the joint component.

By inserting at least a portion of the joint component into a recessed portion of the plastic body and resisting the tendency of the joint component to detach from the body due to the load of the external component by the recessed portion, a stable connection between the joint component and the body can be ensured.

In a preferred embodiment, the body is formed by a blow-molding process, and the joint component is embedded in the body during the blow-molding process of the body. By pre-embedding the joint component during the molding process, the configuration of the recessed portion can be made complementary to the configuration of the portion of the joint component in the recessed portion, so that the joint component can be stably inserted into, or even fixed to, the recessed portion.

In a preferred embodiment, the projection of the portion of the joint component within the recessed portion on the first outer surface covers the projection of the opening of the recessed portion on the first outer surface with at least a first width interference fit.

In this application, "the projection of A on B at least covers the projection of C on B with a first width interference fit", which means that the projection of A on B covers the projection of C on B, and the shortest distance between any point on the outer edge of the projection of C on B and the outer edge of the projection of A on B is greater than or equal to the first width. Therefore, "the projection of the portion of the joint component within the recessed portion on the first outer surface covers the projection of the opening of the recessed portion on the first outer surface with at least a first width interference fit", can effectively ensure that the opening of the recessed portion is sufficiently small so that the joint component is secured within the recessed portion.

Preferably, the recessed portion has a side wall and a bottom, wherein the side wall is provided with an edge extending parallel to the first outer surface at a position away from the bottom, the edge defines an opening of the recessed portion.

Alternatively, the recessed portion has a side wall and a bottom, the side wall at least partially tapers in a direction away from the bottom.

By extending parallel to the first outer surface or tapered side wall, it is possible to effectively ensure that the projection of the opening on the first outer surface is smaller than the projection of the part of the joint component within the recessed portion on the first outer surface, thereby ensuring a particularly stable connection between the joint component and the body.

Alternatively, the joint portion is arranged within the recessed portion and the joint portion is centrally arranged in the joint component and exposed through the opening. On the one hand, the joint portion is suitable for fitting with the uniformly extended edge of the recessed portion, so that the joint portion can be exposed through an opening defined by the uniformly extending edge. On the other hand, the uniformly extending edge has a stable structural strength to confine the joint component within the recessed portion.

Preferably, the joint portion comprises at least one of a threaded hole, a hook and a buckle.

Preferably, the body has a first wall thickness in a portion other than at least one region, and at least partially has a second wall thickness in at least one region, the second wall thickness being more significant than the first wall thickness. Setting up a structure with a larger wall thickness in at least one region can effectively enhance the structural strength of the joint and counteract the problems of thinning of the wall thickness and weakening of the strength, especially in blow-molded parts during the molding process in that area.

Preferably, the portion with the second wall thickness in at least one region is located at the junction with the recessed portion.

Preferably, the first width is greater than the first wall thickness. This further improves the structural strength of the restraining structure of the joint component by the recessed portion.

Alternatively, in order to achieve at least partial formation of a second wall thickness greater than the first wall thickness in at least one region, the joint component may be provided with a flange at a position remote from the opening, the flange being covered by a side wall of the recessed portion.

Alternatively, in order to achieve at least partial formation of a second wall thickness greater than the first wall thickness in at least one region, the first outer surface is provided with a protrusion portion near the opening.

In a preferred embodiment, the body has a second outer surface opposite to the first outer surface, the bottom is provided with a through hole that penetrates to the second outer surface. The external component passes through the through hole from the second outer surface and is joined to the joint component of the joint portion.

Preferably, the body has a first wall thickness, the edge extends with a second width, the second width is less than or equal to the first wall thickness. More preferably, the second width is greater than or equal to 1/3 of the first wall thickness and less than or equal to 2/3 of the first wall thickness.

When the external component passes through the through hole from the second outer surface, and is joined to the joint component of the joint portion, the load force applied by the external component is mainly borne by the bottom of the second outer surface and the recessed portion, while the edge mostly plays a role in preventing the joint component from separating from the body in an unloaded state. Therefore, the edge can be constructed relatively small, which is particularly advantageous when the body is formed from blow molded parts, and the inflation pressure required for the blow molded parts' forming process can be reduced.

In a preferred embodiment, the joint component has a uniform cross-section and extends along the extension direction from the first outer surface, and wherein the angle between the direction of the load force applied by the external component on the joint component and the direction of extension is less than or equal to 90°. By forming the recessed portion in this manner, the joint component can be held in the recessed portion while a load is applied to the joint component, and the joint component can be removed to facilitate replacement with the load removed.

Alternatively, the joint portion comprises at least one of a threaded hole, a hook and a buckle.

Alternatively, the joint component is made of a metallic material.

### Illustration of the Attached Drawing

For a better understanding of the above and other purposes, features, advantages and functions of the present application, reference may be made to the preferred embodiments illustrated in the accompanying drawings. The same reference symbols in the accompanying drawings refer to the same components. Technicians in this field should understand that the accompanying drawings are intended to illustrate the preferred embodiments of the present application, do not limit the scope of the application, and that the various components in the drawings are not drawn to scale.
Figure 1 shows a plan view of a first embodiment of the joint components of the present application;
Figure 2 shows a cross-sectional view of the joint components taken along line A-A in Figure 1.
Figure 3 shows a plan view of a second embodiment of the joint components of the present application;
Figure 4a shows a cross-sectional view of the joint components taken along line B-B in Figure 3.
Figure 4b shows a cross-sectional view of the joint components taken along line C-C in Figure 3.
Figure 5 shows a cross-sectional view of a third embodiment of the joint components of the present application;
Figure 6 shows a cross-sectional view of the joint components taken along line D-D in Figure 5.
Figure 7 shows a cross-sectional view of a fourth embodiment of the joint components of the present application; and
Figure 8 shows a cross-sectional view of the joint components taken along line E-E in Figure 7.

### Specific Implementations

Specific implementations of the present application will now be described in detail with reference to the accompanying drawings. The description here is only based on the preferred embodiment of the present application. Technicians in this field may think of other ways to implement the present application on the basis of the preferred embodiment, which also falls within the scope of the present application.

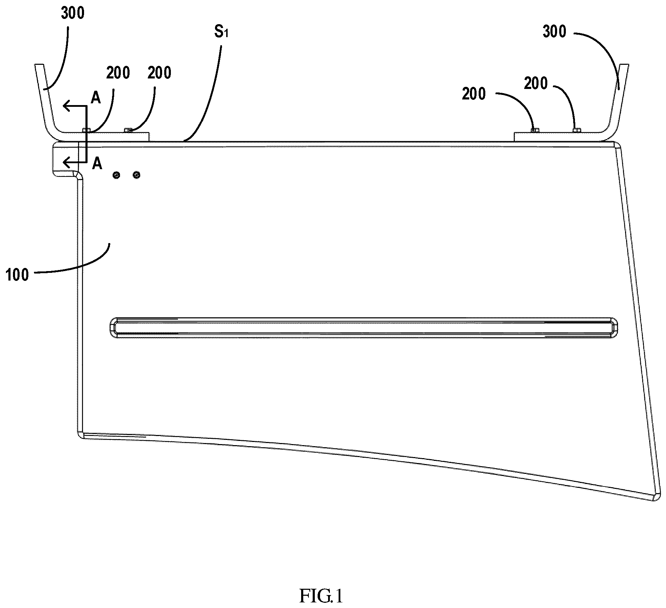

Figure 1 shows a plan view of the first embodiment of the joint components 100 of the present application; in this embodiment, the joint components 100 is configured as a basic structure of a sofa armrest, such as blow molded parts of a sofa armrest, and the external component 200 is configured as a bolt. On both sides of the flat first outer surface S₁ of the joint components 100, the external component 200 is fixed to the joint components 100 together with the bracket 300. Here, the bracket 300 is formed of a metal plate by bending, wherein a through hole is formed in the bracket 300, and the external component 200 is jointed with the joint components 100 after passing through the through hole in the bracket 300, thereby fixing the bracket 300 to the joint components 100.

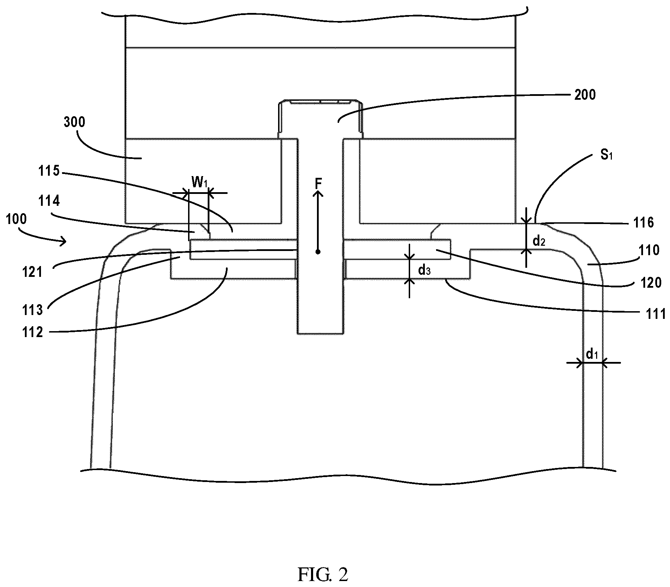

Figure 2 shows a cross-sectional view of the joint components 100 taken along line A-A in Figure 1. As can be seen from the figure, the joint components 100 includes a body 110 and a joint component 120, wherein the body 110 is formed by a blow-molding process, and a joint component 120 is made of a metal material in an annular shape and arranged in a circular shape with a threaded hole in the center, that is, a joint portion 121 for joining with an external component 200 (bolt). The body 110 may also be formed by injection molding, extrusion molding, wood molding, and other processes. The joint component 120 may be embedded in the body 110 during the molding process of the body 110.

The body 110 is provided with a recessed portion 111 in the region where the first outer surface S₁ is located. The recessed portion 111 has a bottom 112 and a side wall 113, and the side wall 113 is provided with an edge 114 extending parallel to the first outer surface S₁ at a position away from the bottom 112, which defines an opening 115 of the recessed portion 111. The joint portion 121 is exposed through the opening 115 so that the external component 200 can be engaged with the joint portion 121. The external component 200 applies a load force along the direction of load force F to the joint component 120.

In this embodiment, the joint component 120 is entirely located in the recessed portion 111 and is restrained by the edge 114 of the recessed portion 111 in the direction of load force F applied by the external component 200 and making it impossible to detach from the recessed portion 111. In particular, the edge 114 extends uniformly from the side wall 113 in a direction parallel to the first outer surface S₁ for a distance W₁ and forms an annular portion, so that the projection of the joint component 120 on the first outer surface S₁ covers the projection of the opening 115 on the first outer surface S₁ with a first width W₁, that is, the projection of the joint component 120 on the first outer surface S₁ covers the projection of the opening 115 on the first outer surface S₁, and the shortest distance between any point on the projected outer edge of the opening 115 on the first outer surface S₁ and the outer edge of the portion of the joint component 120 on the first outer surface S₁ is greater than or equal to the first width W₁. That is, this allows the edge 114 to block the joint component 120 from detaching from the body 110 with the annular portion formed by it. This ensures a particularly stable connection between the joint component 120 and the body 110. In other words, in this embodiment, the joint component 120 cannot be separated from the body 110.

As blow molded parts, the body 110 has a first wall thickness d₁ in most parts, or in parts other than the region in which the recessed portion 111 are arranged. During the blow-molding of the body 110, the wall of the body 110 is stretched at the position of the joint component 120 due to the presence of the joint component 120, so that a third wall thickness d₃ smaller than the first wall thickness d₁ is formed on the bottom 112 and the side wall 113. Since the third wall thickness d₃ is smaller than the first wall thickness d₁, the joint components 100 are less strong at the recessed portion 111 or at the location of the joint component 120. However, the joint components 100 tend to be subjected to the tensile load of the external component here, and therefore its strength requirements tend to be higher.

In order to reinforce the strength at the position where the joint component 120 is located, it may be arranged to have a second wall thickness d₂, which is larger than the first wall thickness d₁, at the connection with the recessed portion 111 in the region where the recessed portion 111 is arranged. In this embodiment, this arrangement is achieved by providing an outward protrusion portion 116 in the area where the recessed portion 111 is arranged, particularly at a position close to the opening 115. In Figure 2, the protrusion portion 116 on the left side is placed closer to the opening 115 than the protrusion portion 116 on the right side. The protrusion portion 116 extends circumferentially to the opening, thereby increasing the thickness of the second wall thickness d₂ relative to the first thickness d₁ and thus reinforcing the structural strength at the connection with the recessed portion, effectively preventing the connection between the joint component 120 and the body 110 from being broken by the load force applied by the external component 200.

In addition, as described above, the edge 114 is able to block the joint component 120 from disengaging from the body 110 by the annular portion it forms, whereby it is envisaged that the strength of such a blocking structure increases as the width of the annular portion of the edge 114, that is, W₁, increases. In particular, in this embodiment, the first width W₁ is equal to the first wall thickness d₁, so that the restriction of the joint component 120 by the recessed portion 111 has basic structural strength.

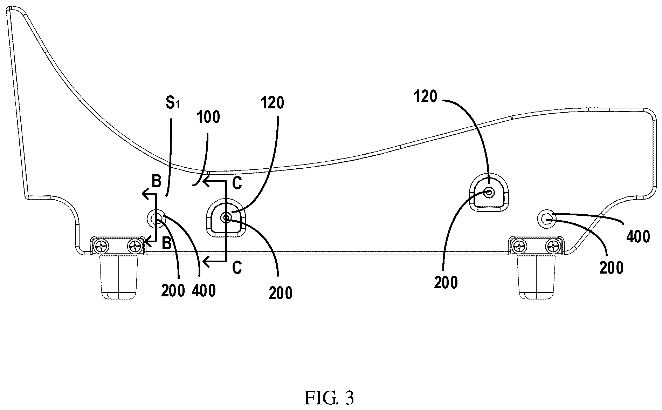

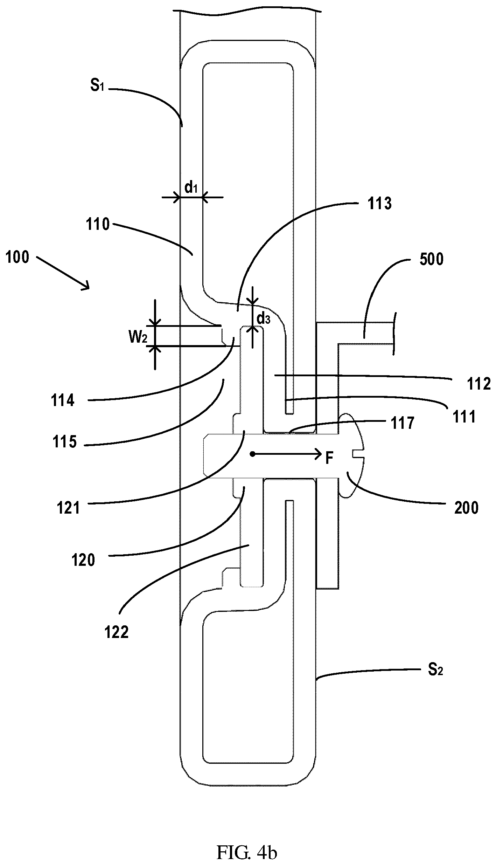

Figure 3 shows a plan view of a second embodiment of joint components 100 of the present application; in this embodiment, the joint components 100 are configured as a basic structure of a sofa base, such as blow-molded parts of the sofa base, and the external component 200 is configured as a bolt. On the outside of the flat first outer surface S₁ of the joint components 100, at positions closer to the two ends, two external component 200 are fixed to the joint components 100 together with the spacer 400; while, closer to the middle, the other two external components 200 are secured to the joint components 100 along with the base bracket 500 (see Figure 4b).

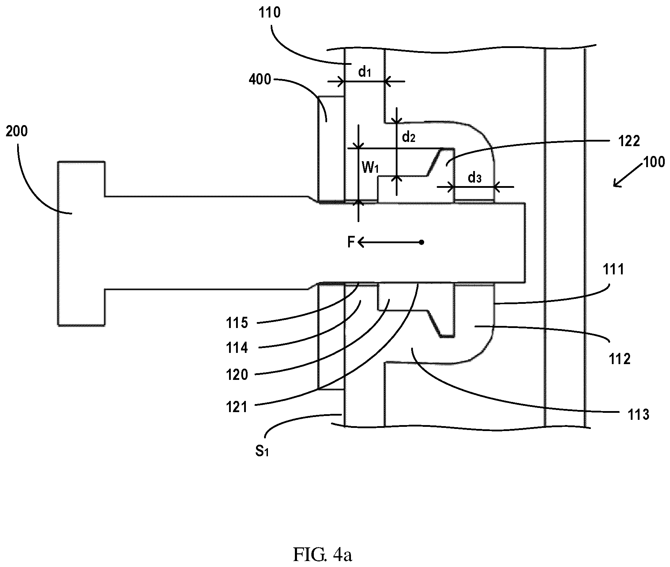

Figure 4a shows a cross-sectional view of the joint components 100 taken along line B-B in Figure 3. As can be seen from the figure, the joint components 100 includes a body 110 and a joint component 120, wherein the body 110 is formed by a blow-molding process, and the joint component 120 made of a metal material into a nut with a flange 122 and centrally arranged with a threaded hole, that is, a joint portion 121 for joining with an external component 200 (bolt). The body 110 may also be formed by injection molding, extrusion molding, wood molding, and other processes. The joint component 120 may be embedded in the body 110 during the molding process of the body 110.

The body 110 is provided with a recessed portion 111 in the region where the first outer surface S₁ is located. The recessed portion 111 has a bottom 112 and a side wall 113, and the side wall 113 is provided with an edge 114 extending parallel to the first outer surface S₁ at a position away from the bottom 112, which defines an opening 115 of the recessed portion 111. The joint portion 121 is exposed through the opening 115 so that the external component 200 can be joining with the joint portion 121 from the first outer surface S₁ through the opening 115. The external component 200 applies a load force along the direction of load force F to the joint component 120. The side wall 113 covers the flange 122 to form a cover.

In Figure 4a, the joint component 120 is entirely located in the recessed portion 111 and is constrained by the edge 114 of the recessed portion 111 in the direction of load force F exerted by the external component 200 and making it impossible to detach from the recessed portion 111. In particular, the edge 114 extends uniformly a distance from the side wall 113 in a direction parallel to the first outer surface S₁ and forms an annular portion, in addition to the fact that the joint component 120 has a flange 122 covered by the side wall 113, such that the projection of the joint component 120 on the first outer surface S₁ covers the projection of the opening 115 on the first outer surface S₁ with a first width W₁ interference fit. That is to say, this enables the edge 114 to cooperate with the annular portion it forms and the side wall 113 with the covering portion it forms against the flange 122 of the joint component 120 to block disengagement of the joint component 120 from the body 110. This ensures a particularly stable connection between the joint component 120 and the body 110. In other words, in this embodiment, the joint component 120 cannot be separated from the body 110.

In particular, the flange 122 of the joint component 120 is in a tapered configuration on the side close to the opening 115, and the side wall 113 is thus also partially tapered, further ensuring a particularly secure connection between the joint component 120 and the body 110. In addition, by arranging the outer side of the joint component 120 at least partially to taper towards the opening 115, it is possible to enable the side wall 113 to form a configuration on the inside that tapers towards the opening 115, which also ensures a particularly stable connection between the joint component 120 and the body 110 without the provision of the edge 114.

Likewise, as blow molded parts, the body 110 has a first wall thickness d₁ in most parts, or in parts other than the region in which the recessed portion 111 are arranged, but a third wall thickness d₃ smaller than the first wall thickness d₁ is formed on the bottom 112 and side wall 113. In order to strengthen the strength at the position where the joint component 120 is located, the side wall 113 of the recessed portion 111 has a second wall thickness d₂ at a position close to the opening 115, and the second wall thickness d₂ is larger than the first wall thickness d₁. In this embodiment, this arrangement is achieved by arranging the flange 122 at a location of the joint component 120 remote from the opening 115.

In addition, as described above, the edge 114 is able to form a annular portion and the side wall 113 can jointly block the joint component 120 from detaching from the body 110 with the covering portion of the flange 122 of the joint component 120 formed by it, whereby it is conceivable that the strength of such a blocking structure increases as the sum of the widths of the annular portion of the edge 114 and the covering portion of the side wall 113 increases, that is, W₁. In particular, in this embodiment, the first width W₁ is greater than the first wall thickness d₁, so the confinement of the joint component 120 by the recessed portion 111 has enhanced structural strength.

Figure 4b shows a cross-sectional view of the joint components 100 taken along line C-C in Figure 3. As can be seen from the figure, the joint components 100 includes a body 110, another joint component 120, wherein the body 110 is formed by a blow-molding process, and another joint component 120 is made of a metal material into a D-shaped metal plate having a flange 122 and centrally arranged in the center (see Figure 3), wherein the threaded hole serves as an joint portion 121 for joining with an external component 200 (bolt). The body 110 may also be formed by injection molding, extrusion molding, wood molding, and other processes. The joint component 120 may be embedded in the body 110 during the molding process of the body 110.

The body 110 is provided with a recessed portion 111 in the region where the first outer surface S₁ is located. The recessed portion 111 has a bottom 112 and a side wall 113, and the side wall 113 is provided with an edge 114 extending parallel to the first outer surface S₁ at a position away from the bottom 112, which defines an opening 115 of the recessed portion 111. The body 110 also has a second outer surface S₂ disposed that is opposite to the first outer surface S₁, and the bottom 112 is provided with a through hole 117 that penetrates to the second outer surface S₂. The external component 200 passes through the through hole 117 from the second outer surface S₂ and joint component 120 to the joint portion 121 to fix the base bracket 500 to the second outer surface S₂ of the joint components 100. The external component 200 applies a load force along the direction of load force F to the joint component 120.

In Figure 4b, the joint component 120 is entirely located in the recessed portion 111 and is constrained by the bottom 112 of the recessed portion 111 in the direction F of the load force exerted by the external component 200. In particular, the edge 114 extends uniformly from the side wall 113 in a direction parallel to the first outer surface S₁ by a second width W₂ and forms an annular portion, so that the projection of the joint component 120 on the first outer surface S₁ covers the projection of the opening 115 on the first outer surface S₁ with the first width (where the first width is equal to the second width W₂). That is, this allows the edge 114 to block the joint component 120 from detaching from the body 110 with the annular portion formed by it. This ensures a stable connection between the joint component 120 and the body 110.

Likewise, as blow molded parts, the body 110 here has a first wall thickness d₁, but a third wall thickness d₃ smaller than the first wall thickness d₁ is formed on the bottom 112 and the side wall 113. The difference from that in Figure 4a is that the loading force exerted by the external component 200 here is mainly borne by the bottom 112 of the recessed portion 111, while the edge 114 mainly serves to prevent separation of the joint component 120 from the body in the unloaded state. Therefore, the second width W₂ extended by the edge 114 can be configured to be greater than 0 and less than or equal to the first wall thickness d₁, more preferably configured to be greater than or equal to 1/3 of the first wall thickness d₁, and less than or equal to 2/3 of the first wall thickness d₁, so that the edge 114 can be formed with less blowing gas pressure, which is extremely advantageous for the molding of the blow-molded parts.

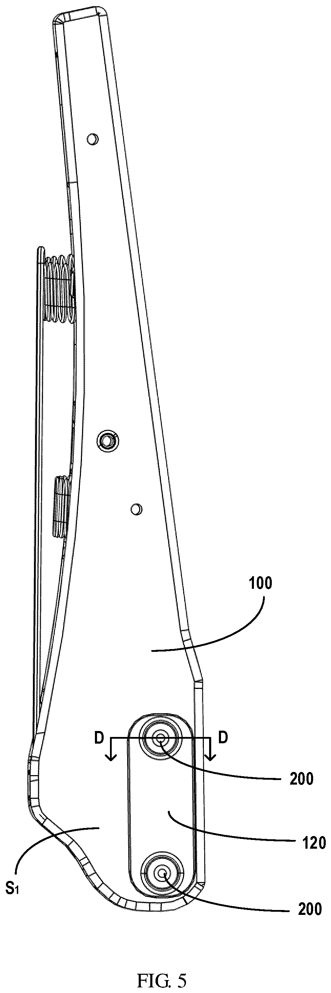

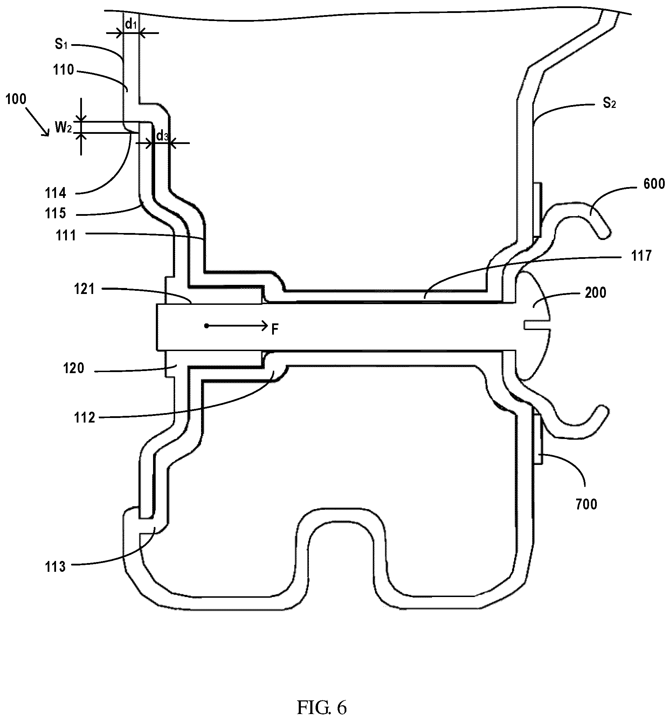

Figure 5 shows a cross-sectional view of a third embodiment of the joint components 100 of the present application; in this embodiment, the joint components 100 is configured as a basic structure of a sofa back, such as a blow molded parts of the sofa back, and the external component 200 is configured as a bolt. On the outside of the flat first outer surface S₁ of the joint components 100, two external components 200 are secured to the joint components 100 along with the connecting component 600 and the spacer 700 (see Figure 6).

Figure 6 shows a cross-sectional view of the joint components 100 taken along line D-D in Figure 5. As can be seen from Figures 5 and 6, the joint components 100 includes a body 110 and a joint component 120, wherein the body 110 is formed by a blow-molding process, and a joint component 120 is made of an oblong metal plate to form a long circular metal plate, which has two threaded holes as joint portion 121 for joining with an external component 200 (bolt). The body 110 may also be formed by injection molding, extrusion molding, wood molding, and other processes. The joint component 120 may be embedded in the body 110 during the molding process of the body 110.

The body 110 is provided with a recessed portion 111 in the region where the first outer surface S₁ is located. The recessed portion 111 has a bottom 112 and a side wall 113, and the side wall 113 is provided with an edge 114 extending parallel to the first outer surface S₁ at a position away from the bottom 112, which defines an opening 115 of the recessed portion 111. The body 110 also has a second outer surface S₂ disposed that is opposite to the first outer surface S₁, and the bottom 112 is provided with a through hole 117 that penetrates to the second outer surface S₂. The external component 200 passes through the through hole 117 from the second outer surface S₂ and is joint component 120 to the joint portion 121 to fix the connecting component 600 and the spacer 700 to the second outer surface S₂ of the joint components 100. The external component 200 applies a load force along the direction of load force F to the joint component 120.

Similar to the embodiment in Figure 4b, in Figure 6, the joint component 120 is entirely located in the recessed portion 111 and is constrained by the bottom 112 of the recessed portion 111 in the direction F of the load force exerted by the external component 200 and cannot be disengaged from the recessed portion 111. The edge 114 extends uniformly from the side wall 113 by a second width W₂ in a direction parallel to the first outer surface S₁ and forms an annular portion, such that the projection of the joint component 120 on the first outer surface S₁ interferes with the projection of the opening 115 on the first outer surface S₁ by the first width, where the first width is equal to the second width W₂. That is, this allows the edge 114 to block the joint component 120 from detaching from the body 110 with the annular portion formed by it. This ensures a stable connection between the joint component 120 and the body 110.

Likewise, as blow molded parts, the body 110 here has a first wall thickness d₁, but a third wall thickness d₃ is formed on the bottom 112 and the side wall 113, which is smaller than the first wall thickness d₁, and the second width W₂ over which the edge 114 extends is configured to be equal to 2/3 of the first wall thickness d₁, so that the edge 114 can be formed with smaller blowing gas pressure to facilitate the molding of the blow molded parts.

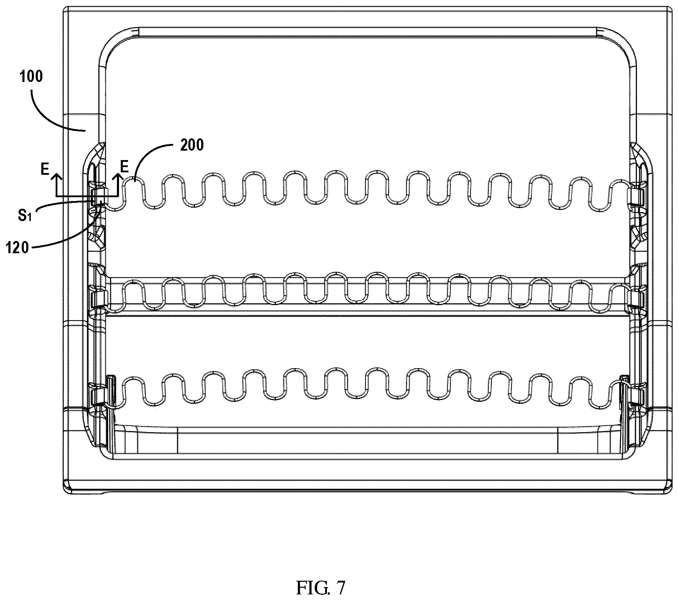

Figure 7 shows a cross-sectional view of a fourth embodiment of the joint components 100 of the present application; in this embodiment, the joint components 100 are configured as a basic structure of a sofa back, such as blow molded parts of the sofa back, and the external component 200 is configured as a spring. The external component 200 is engaged with the joint components 100 on the flat first outer surface S₁ provided on the left and right sides of the joint components 100, respectively.

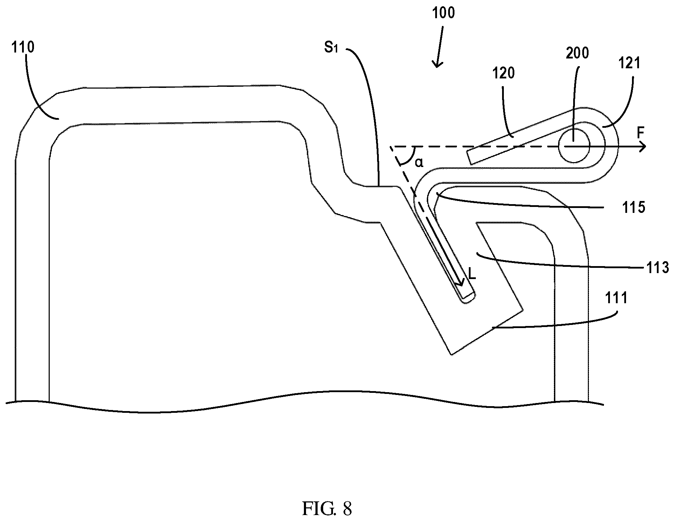

Figure 8 shows a cross-sectional view of the joint components 100 taken along line E-E in Figure 7. As can be seen from the figure, the joint components 100 include a body 110 and a joint component 120, wherein the body 110 is formed by a blow-molding process and an joint component 120 is made of a metal material into a bent metal hook, which has a uniform cross section and joint portion 121 for joining with an external component 200 (spring). The body 110 may also be formed by injection molding, extrusion molding, wood molding, and other processes. The joint component 120 may be embedded in the body 110 during the molding process of the body 110. In particular, in this embodiment, the joint component 120 may be separated from the body 110 after the body 110 is molded.

The body 110 is provided with a recessed portion 111 in the area where the first outer surface S₁ is located, which has an opening 115 on the first outer surface S₁ and is configured to extend concavely from the first outer surface S₁ in the direction of extension L to form a groove in a region where the first outer surface S₁ is located. Accordingly, joint component 120 has a bent section which can enter the groove of the recessed portion 111 and joint portion 121 which is outside the recessed portion, wherein the bent section that can enter the groove of the recessed portion 111 also extends from the first outer surface S₁ in the direction of extension L. After the external component 200 joins with the joint portion 121 of the joint component 120, a load force acting in the direction F is applied to the joint component 120, wherein an acute angle α is formed between the direction of extension L and the direction of load force F. In this case, even if the joint component 120 is not fixed in the recessed portion 111, the joint component 120 can still be restricted by the side wall 113 of the recessed portion 111 in the direction of load force F applied by the external component 200, that is, the joint component 120 can establish a stable connection with the body 110 under the continuous load force of the external component 200. In particular, the angle between the direction of extension L and the direction of load force F needs to be less than or equal to 90°, preferably between 30° and 60°.

The joint component 120 which can be separated from the body 110 can be easily replaced, and is particularly suitable for a situation where the direction of load force F is stable and does not act perpendicularly to the first outer surface S₁, and is particularly suitable for a situation where the direction of load force F acts parallel to the first outer surface S₁.

The above description of the various embodiments of the present application is provided to a person of ordinary skill in the relevant art for the purpose of description. It intends to exclude or limit the present application to a single disclosed embodiment. As above, ordinary technicians in this field will understand the various alternatives and modifications of the present application. Thus, although some alternative embodiments have been described in detail, ordinary technicians in this field will understand or relatively easily develop other embodiments. This application is intended to include all alternatives, modifications and variations of the present application described herein, as well as other embodiments falling within the spirit and scope of the present application described above.

### List of Reference Symbols

- 100: Joint components
- 110: Body
- 111: Recessed portion
- 112: Bottom
- 113: Side wall
- 114: Edge
- 115: Opening
- 116: Protrusion portion
- 120: Joint component
- 121: Joint portion
- 122: Flange
- 200: External component
- 300: Bracket
- 400: Spacer
- 500: Base bracket
- 600: Connecting component
- 700: Spacer
- S₁: The first outer surface
- S₂: Second outer surface
- d₁: First wall thickness
- d₂: Second wall thickness
- d₃: Third wall thickness
- W₁: First width
- W₂: Second width
- F: Direction of load force
- L: Direction of extension
- α: Angle between the direction of extension and the direction of load force

## Claims

1. The joint components for joining an external component, wherein in that the joint components comprise:
A body made of plastic and having the first outer surface in at least one region and having, in the at least one region, at least the first recessed portion inwardly relatively to the first outer surface, in the at least one region, the recessed portion having an opening; and
A joint component, the joint component having an joint portion for joining the external component, wherein at least a portion of the joint component is arranged within the recessed portion and is restricted by the recessed portion in a direction of load force applied by the external component to the joint component.

2. The joint components, according to claim 1, wherein in that the body is formed by a blow-molded process, the joint component is embedded in the body during the blow-molded process of the body.

3. The joint components, according to claim 1, wherein in that the projection of the part of the joint component inside the recessed portion on the first outer surface at least covers the projection of the opening of the recessed portion on the first outer surface with a first width interference fit.

4. The joint components, according to claim 3, wherein in that the recessed portion has a side wall and a bottom, wherein the side wall is provided with an edge extending parallel to the first outer surface at a position away from the bottom, the edge defines an opening of the recessed portion.

5. The joint components, according to claim 3, wherein in that the recessed portion has a side wall and a bottom, the side wall at least partially tapers in a direction away from the bottom.

6. The joint components, according to claim 3, wherein in that the joint portion is arranged within the recessed portion and the joint portion is centrally arranged in the joint component and exposed through the opening.

7. The joint components, according to claim 3, wherein in that the body has a first wall thickness in a portion other than the at least one region, and at least partially has a second wall thickness in the at least one region, the second wall thickness being greater than the first wall thickness.

8. The joint components, according to claim 7, wherein in that the portion with the second wall thickness in at least one region is located at the junction with the recessed portion.

9. The joint components according to claim 7, wherein in that the first width is greater than the first wall thickness.

10. The joint components, according to claim 7, wherein in that the joint component is provided with a flange at a position remote from the opening, and the flange is covered by a side wall of the recessed portion.

11. The joint components, according to claim 7, wherein in that the first outer surface is provided with a protrusion portion near the opening.

12. The joint components, according to claim 4, wherein in that the body has a second outer surface opposite to the first outer surface, the bottom is provided with a through hole that penetrates to the second outer surface, and the external component is joined to the joint portion of the joint component through the through hole from the second outer surface.

13. The joint components, according to claim 12, wherein in that the body has a first wall thickness, the edge extends with a second width, the second width is less than or equal to the first wall thickness.

14. The joint components, according to claim 13, wherein in that the second width is greater than or equal to 1/3 of the first wall thickness and less than or equal to 2/3 of the first wall thickness.

15. The joint components, according to claim 1, wherein in that the portion of the joint component has a uniform cross-section in the recessed portion and extends from the first outer surface in the direction of extension, and wherein the angle between the direction of load force exerted by the external component on the joint component and the direction of extension is less than or equal to 90°.

16. The joint components, according to claim 1, wherein in that the joint portion comprises at least one of a threaded hole, a hook and a buckle.

17. The joint components, according to claim 1, wherein in that the joint component is made of a metallic material.
